# EUROPEAN PATENT APPLICATION

(11) **EP 1 333 372 A1**
(43) Date of publication of application: **06.08.2003**
(21) Application number: 02002345.3
(22) Date of filing: 31.01.2002
(51) Int. Cl.: G06F 3/12

(54) **Method of verifying a print job processing possibility in a printing system**

(71) Applicant: Hewlett Packard Company, a Delaware Corporation, Palo Alto, CA 94304 (US)
(72) Inventor: González, Manuel, 08012 Barcelona (ES); Such, Albert, 08036 Barcelona (ES)
(74) Representative: Orsi, Alessandro

(57) **Abstract**

A method of verifying the operation of a printing system, comprising the steps of: transmitting from a data processing device to the printing system a message comprising data identifying a plurality of processes associated with a corresponding print job and further comprising process requirements associated with the plurality of processes; verifying at the printing system that the plurality of processes are processable, without printing image data corresponding to the print job; and, communicating to the device the result of the verification step.

## Description

### Field of the Invention

The present invention relates generally to a communication method and system for use in printing systems, particularly, although not exclusively, to an improved method and system for transmitting print jobs for printing in remote proofing systems.

### Background to the Invention

When an electronic image is sent to be printed from an electronic device, such as a PC, to a printer that is connected remotely to the device, for example via a local area network or the Internet, it is desirable to know whether the printer may be accessed and is ready to print, prior to sending the print job. If the printer cannot be accessed by the device for some reason, or is not ready to print, the user will be subject to an inconvenient delay. It is also desirable to know prior to sending the print job whether the printer is correctly configured to print the job. If it is not, the printed output may not be satisfactory, resulting in a waste of printing resources in the form of print medium, ink and printer time.

One known solution to the problem of determining the accessibility of a printer prior to sending the print job is to send a "test print page". However, this approach necessitates wasting print resources. Furthermore, this approach uses the Simple Network Management Protocol to allow data relating to the printer status and configuration to be communicated across a network. However, this approach relies upon separate printing and control paths, which gives rise to an additional unwanted network overhead. Furthermore, it means that intermediate servers in the network must support the protocol, giving rise to scalability problems.

The problem is exacerbated in certain systems where high quality printed images are required. For example, in print on demand e-services or remote proofing services. This is because the range of possible processes which may be used in printing the images printed by such systems is high, thus increasing the chances of an incorrect printer configuration being used for a given print job. Furthermore, the cost of wasting printing resources may be significantly higher in specialist printing techniques.

Therefore, It would be desirable to provide a method and system that overcome one or more of the disadvantages associated with the prior art.

### Summary of the Invention

According to one aspect of the present invention there is provided a method of verifying the operation of a printing system, comprising the steps of: transmitting from a data processing device to the printing system a message comprising data identifying a plurality of processes associated with a corresponding print job and further comprising process requirements associated with the plurality of processes; verifying at the printing system that the plurality of processes are processable, without printing image data corresponding to the print job; and, communicating to the device the result of the verification step.

Thus, embodiments of the present invention allow a data processing device such as the PC of a graphic artist, or other client, to send a communication to a printer system to establish that a given print job will be correctly processed, without the printing system actually attempting to implement the print job. Thus, the printing system may be configured to recognise such messages and to consequently not implement the corresponding print job. Thus, wasted printing resources may be avoided in the event that the system is not able to print the print job correctly.

Preferably, the printing system determines that the print job may be printed, or is implementable without error, without processing image data relating to the print job, which may represent a waste of resources to the printer system. Preferably, the method is implemented without the printer system even receiving any image data relating to the print job. Advantageously, the processing demands on the printer system in determining the processability of the workflow are significantly less than that required to process the corresponding print job; thus, implementing methods of embodiments of the invention represents a very low overhead for printer system, which may be a commercial organisation.

Preferably, the identified processes and process requirements, which may at least partially define a printing workflow are defined using a printing Job Ticket standard; thus, providing an existing method of describing the requirements of a desired workflow to the printer system. Preferably, the method of describing or defining the processes to be carried out in the workflow allows for all conventional types of pre-press, printing or post-press type processes.

Preferably, the Job Ticket or similar data file which details the processes desired by the client are managed by a software application associated with the printer system. The software application may transmit the Job Ticket to the various software and hardware entities which are arranged to carry out the various processes. In this manner, these entities may identify the resources that will be required in order to carry out the process. Such resources may include any of the following: hardware resources such as one or more data processing devices, memory, printers or laminators, or the component systems thereof; or, software, such as programs, program modules or libraries; or, consumables, such as ink, print media or lamination material. Thus, preferably, these resources include both resources specified by the Job Ticket or similar data file and resources which, although not specified by the Job Ticket, may nevertheless be identified by the entity as being required. Alternatively, or additionally, the entities may determine whether they are suitably configured to implement the process, and/or whether settings or parameters specified in the Job Ticket are valid, internally consistent or achievable.

Preferably, when the printing system has determined that the print job may or may not be carried out without error, it notifies an interested party, such as a server, or an individual, of the determination. In preferred embodiments, the step of transmitting the message from the data processing device, which may be a PC or a server for example, to the printer system may be carried out using the same communication channel(s) that a normal print job would use. In this manner, no separate control path is required between the client and the printer system.

In a preferred embodiment, the printer system is a commercial printing establishment such as a print on demand e-service, or a remote proofing printing service. However, the printer system may also be a printer device or modular device or system arranged to implement print jobs controlled by work flows or similar, or to accept similar programming inputs or controls.

The present invention also extends to the corresponding apparatus and/or system for implementing the above method. Furthermore, the present invention also extends to a computer program, arranged to implement the method of the present invention.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a high level schematic representation of a digital remote proofing system arranged to implement the method of one embodiment of the present invention;
Figure 2 is a flow diagram schematically illustrating the method of one embodiment of the present invention; and,
Figure 3 is a schematic illustration of a job ticket according to one embodiment of the present invention.

### Detailed Description of the Best Mode for Carrying Out the Invention

There will now be described examples of the best mode contemplated by the inventors for carrying out the invention.

### First embodiment

One application for the present invention is in a remote proofing printing system.

Generally, an image will appear slightly different when printed on different printers, even if the printers are of the same type and model. Because of this, a commercially printed image of a given file will often look noticeably different from preliminary test prints, or proofs, generated from the same file with a different printer, such as that of the graphic artist, or the end client.

As is well understood in the art of remote proofing, by calibrating two or more printers to emulate the colour space of a selected printer, it may be ensured that the printed outputs of those printers are visually consistent. In this manner, if a graphic artist, his client and a commercial printer each possess a similarly calibrated printer, each may print and view visually consistent copies of the image. Since the digital file corresponding to the image may be transmitted between the parties electronically, this process avoids the need for the parties to physically meet to approve the same printed image; thus saving costs.

Thus, in a generalised remote proofing system, the graphic artist may transmit a proof file to an end client to obtain the client's approval and authorisation to proceed. This is often known as "concept proofing". Subsequently, the graphic artist will transmit the client-approved proof file to the commercial printer where it may be used in printing a print run. Also, a client-approved proof file may be used in pre-press tasks, such as colour matching and font checking, and/or post-press tasks. This process is often known as "contract proofing". The present embodiment may be applied to either the concept proofing or the contract proofing scenario. However, the following example will be described in the context of a contract proofing scenario.

### System of the first embodiment

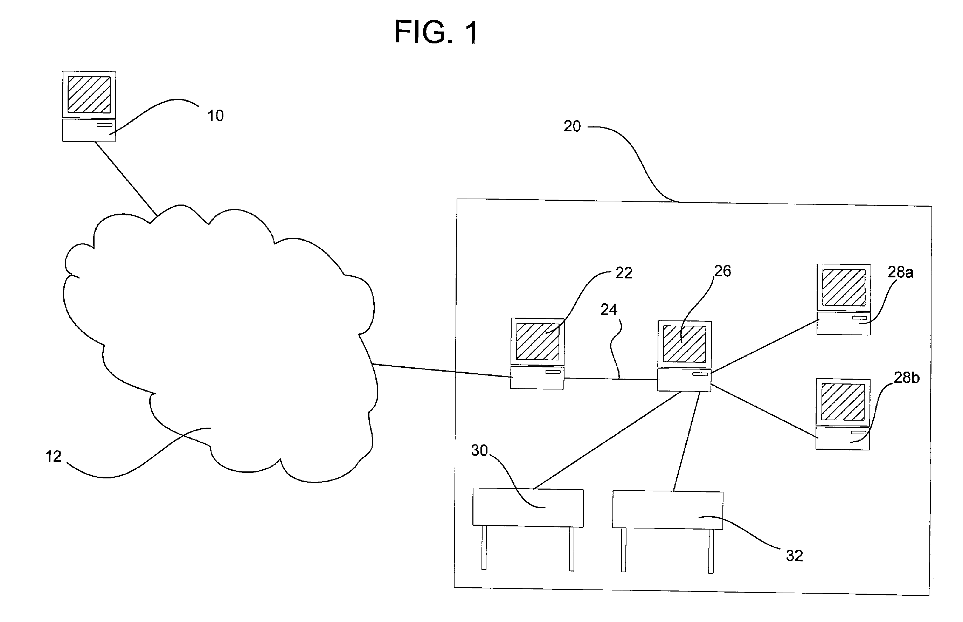

Figure 1 schematically illustrates a contract proofing system arranged to implement the method of the present embodiment. In Figure 1, a stand-alone personal computer 10 is shown. This personal computer may be used by a "graphic artist" to generate image data, or a file, which is to be printed. The personal computer may be an Apple Macintosh running an operating system such as Apple Mac OS 8.6™, or alternatively a PC running the Windows 2000™ operating system, for example. Any suitable application program may be used to generate the image file to be printed, such as Adobe Photoshop™. The personal computer is also arranged to run suitable remote proofing software for transforming a graphic or image file in to a proof file and for communicating with a commercial printer 20 (CP), where remote proofs and/or print runs may be printed. One example of commercially available remote proofing software is "RenderView™", developed jointly by Scitex™ and Rtimage™, available from Scitex America Corp.™, 8 Oak Park Dr., Bedford, MA 01730, 781-275-5150, fax: 781-275-3430, Web: www.scitex.com.

The personal computer is connected to a remotely situated CP 20. In the present embodiment, this connection is via the Internet 12 and the personal computer and the CP are arranged to communicate via e-mail in a conventional manner, as is well understood by the skilled reader. The skilled reader will realise that any suitable protocol may be chosen to facilitate such communication. Therefore, intermediate devices and hardware such as e-mail server computers are not shown. The skilled reader will however appreciate that the Internet is merely an example the communication infrastructure which may be used with the present invention. Other communication infrastructures may include: local area networks (LANs); wide area networks (WANs); or, wireless connections and the like. Similarly, alternative communication formats, such as a File Transport Protocol, may be used in the place of e-mail.

As is shown in the figure, the CP 20 includes various hardware elements. Each of the hardware elements in this example may be of conventional design and commercially available. As such, they are well understood by the skilled reader and so will not be described in detail.

The first of these elements is an Internet enabled computer 22, such as a PC, that is configured to receive e-mails from the personal computer 10 via the Internet 12. The computer is arranged to communicate via a connection of a suitable communications network 24, such as a Local Area Network (LAN) to a Workflow Manager. The Workflow Manager is a software application or entity, which in this embodiment is arranged to co-ordinate the processes required to print the print job received from the personal computer 10 and to manage the processes carried out by the remote proofing software used in the present embodiment by the CP, as is described more fully below. In the present embodiment, the Workflow Manager is run on a conventional computing device, preferably a conventional server 26.

One or more further computing devices, which may be conventional PCs 28 are connected to further nodes of the same network 24 and thereby to the Workflow Manager.

The PCs 28 are programmed to carry out a range of processing tasks that might be required for a range of workflows that the CP may provide. However, the skilled reader will appreciate that most print jobs will require only certain processes from the range of possible processes. These processes are conventional processes known in the art and may include, amongst others, rasterising, preflighting, imposition, printing and laminating an image. Each process is managed by a respective software component. Additionally, the PCs 28 are configured to run remote proofing software compatible with remote proofing software run by the personal computer 10.

In the present example, only two PCs, referenced 28a and 28b, are illustrated. In this example, the PC 28a is arranged to carry out imposition processes; i.e. the determination or verification of the layout of a printed image on the print media; and, the PC 28b is arranged to carry out preflighting processes; i.e. the checking that certain resources, for example fonts, that are required by a given software component are available to that software component. However, in other embodiments, all processes could be carried out by one processing device, or more than two processing devices could be used. The number processing devices such as the PCs 28 that are required and how the processing tasks are allocated among them will vary depending upon the requirements of the individual commercial printer, as will be understood by the skilled reader.

As can be seen from the figure, a digital printer 30 is also arranged to communicate with the Workflow Manager via a further node of the network 24. The printer is configured to receive print data from the Workflow Manager, once it has been correctly processed by the PCs 28, and then to print a hardcopy image corresponding to the print job transmitted from the personal computer 10. Examples of printers which may be used in remote proofing applications are the HP DesignJets 10ps, 20ps and 50ps.

Although a CP will generally have a range of printer types and sizes, catering for various markets, only one printer is shown in the figure. In this case, printer 30 represents a printer that can be calibrated to emulate the colour space of a selected printer, associated with the print job of the present example.

Also shown in the figure is a laminator 32 that is arranged to laminate printed images. Like the printer 30, the laminator is also arranged to communicate with the Workflow Manager via a further node of the network 24.

### Remote proof files

Conventionally, remote proof files, often referred to as a "proof files", used in remote proofing systems are made up of two separate parts. The first of these parts consists of the image page(s) or file(s) to be printed. This is often known as the "proof document contents" and is conventionally provided in Portable Document Format (PDF). However, other suitable formats such as, PostScript and Tiff formats may also be used.

The second of these parts consists of a companion "job ticket". The job ticket is a data file associated with the proof document contents. It identifies the files making up the files proof document contents for a given job together with their location. The job ticket also contains the necessary information, specifying how a print job should be carried out in order to generate an accurate and consistent proof conforming to the desires of a customer. Firstly, it defines the configuration or "job settings" of the printer that is to print the job. This has the effect of making each printer within the remote proofing system emulate the colour space of a selected printer. This in turn ensures that irrespective of which of the printers in the remote proofing system is used to print the image, the output is visually similar. Secondly, it defines the job "workflow". That is to say a description of each process that must be carried out to implement the job. Amongst other processes, these may include rasterising, preflighting and printing etc. In the case of printing, the workflow should include information defining the print medium size and type to be used and any post-printing processes, such as lamination. Thus, the workflow can be seen as a kind of "job program". The job ticket also records the current status of the job as well as what has happened to the job so far.

Generally, the job tickets are described in a standard format, meeting all the requirements to facilitate consistent output on different proofing devices. One such known format for job tickets, which is suitable for use with the present embodiment, is the Job Definition Format (JDF) standard defined in JDF Specification Release 1.0; developed by the CIP4 Organization.

A proof file may be generated using the remote proofing software run on the personal computer of the graphic artist. This is carried out in a known manner and so will not be described further. Once a proof file has been generated and the resulting proof (i.e. hardcopy output resulting from printing the proof file on a calibrated printer) has been approved, usually either by the graphic artist himself, or his client, the proof file is ready to be transmitted to the CP for printing.

### Mode of operation of the first embodiment

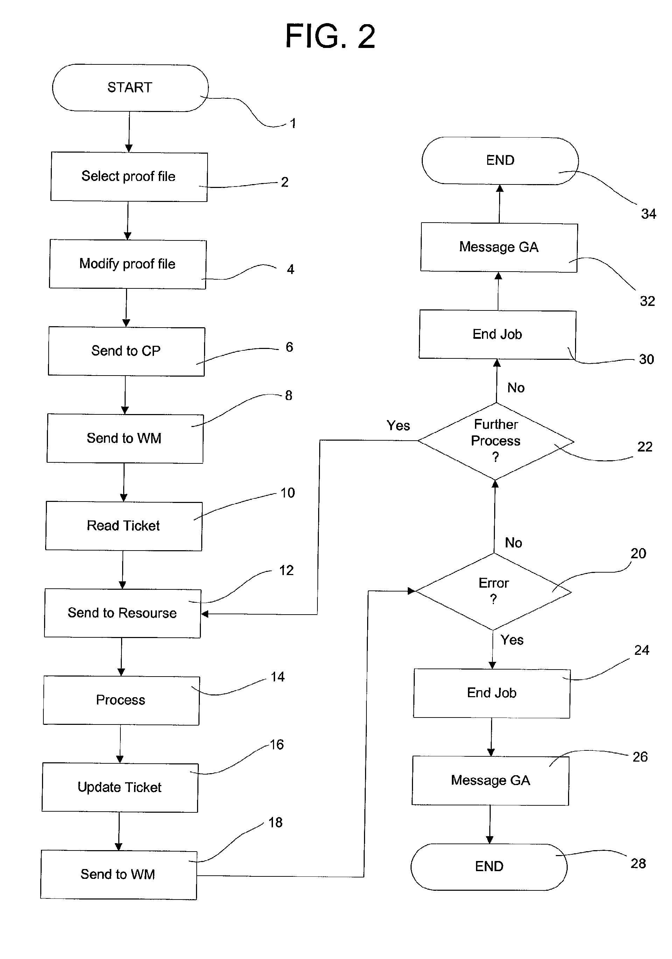

Referring to Figure 2, the method of operation of the present embodiment will now be described.

The process starts at step 1, where a proof file is generated by a graphic artist, as has been described above. At step 2, a graphic artist selects the generated proof file, corresponding to an image that he requires to be printed by the CP 20. At step 4, the graphic artist generates a modified version of the selected proof file. The modified proof file contains a copy of the job ticket of the original proof file; i.e. unmodified. However, the modified proof file contains no proof document contents. This may be achieved in two ways. Either, the modified proof file may contain no image files, and thus no image data. Or, alternatively, it may contain one or more image files, where the image file or files contain no image data. It will be understood that the modified proof file may be generated either manually by the graphic artist, or automatically, using software running on the personal computer 10.

At step 6, the modified proof file is transmitted from the personal computer 10 to the Internet enabled computer of the CP. This may be done by e-mail, where the modified proof file is an e-mail attachment, for example, as is described above. Subsequently, the computer 22 transmits the modified proof file, which may be viewed as a print job, via the network 24 to the Workflow Manager, in a conventional manner, at step 8.

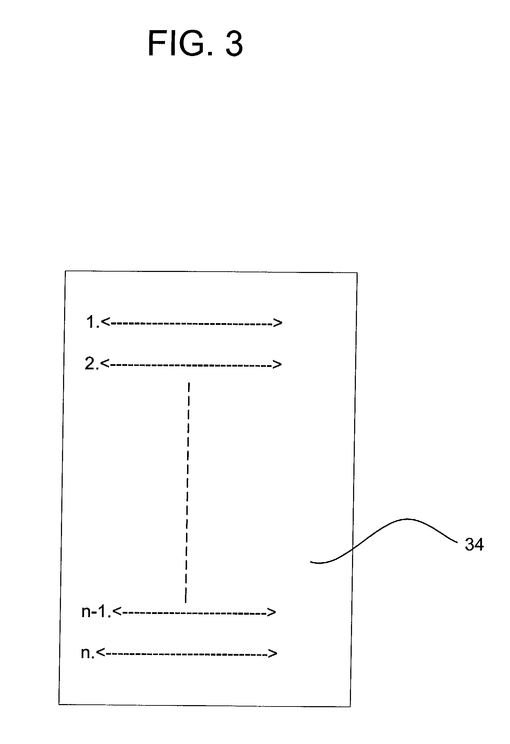

The Workflow Manager then, at step 10, reads to job ticket of the print job in the normal manner when receiving a new print job. Referring to Figure 3, the job ticket 34 is schematically illustrated. As is described above, the job ticket 34 is composed of each of the processes that must be sequentially undertaken in order to correctly carry out the print job. In Figure 3, only the first two processes and the last two processes are shown. The first two processes are respectively represented as "1" and "2" and the last two processes are respectively represented as "n-1" and "n".

Each of the processes on the job ticket contains definition data defining what that process is. In the figure, this data is illustrated by the graphics, "<----->". In the present example, the illustrated processes may correspond to the following functions:
1 Imposition
2 Preflighting
n-1 Printing
n Lamination

Additionally, the definition data contained in each process specifies how that process should be carried out. For example, the printing process "n-1" will normally contain information relating to the type and size of the print medium to be used. It will also contain, amongst other information, the colour reproduction characteristics, or colour profile, of the printer that is being emulated. Generally this will be an ICC colour profile as are well known and understood in the art. However, other suitable colour profiles may instead be used.

Having read the job ticket at step 10, the Workflow Manager determines the next process (or as it is at this stage of the work flow, the first process), specified by the job ticket. In this example, the first process step, "1", is "imposition". Consequently, at step 12, the Workflow Manager transmits the print job, including the job ticket and any associated empty data files that there might be, to the resource which is to carry out this process; in this case imposition software running on the PC 28a.

This communication may be sent using any suitable protocol or messaging format. One such known format, which is suitable for use with the present embodiment, is Job Messaging Format (JMF), which is an XML based messenger format with multilevel messaging capabilities. JMF is included within the JDF specification. Information about JDF and JMF may be found at the CIP4 web site: http://www.cip4.org/

Once the PC 28a receives the job ticket and any associated empty data files, it carries out the required process, in this case imposition, as it is defined in the job ticket, at step 14. Since the print job actually contains no proof document contents, it carries out the imposition process on zero image data. Thus, the PC 28a does not generate a post-imposition file as would be generated if the proof document contents were present. However, it nevertheless determines whether the process can be correctly performed, since if no errors are generated when carrying out the process on the modified proof file, it can be assumed that no errors would normally be generated when carrying out the process on the unmodified proof file. This is possible since the imposition software running on the PC 28a verifies that all of the resources required to implement the process, as defined by the job ticket, are available to it at step 14. Furthermore, it may verify that other resources, which are required to implement the process but not specified in the job ticket, are also available. Such resources may include, for example, certain software libraries or files. Such software libraries may be required in order to allow the imposition software to correctly interact with the operating system of PC 28a, for example. Additionally, it may verify that the parameters controlling the process, also as defined in the job ticket, are valid.

The skilled reader will understand that in alternative embodiments, the system may be configured to recognise proof files with no proof document contents and to skip any attempt to process image data; i.e. simply to carry out the process of determining that each process can be correctly performed.

At step 16, the PC 28a updates the relevant process in the job ticket to reflect its current status. If the process was carried out without an error being generated, the status of the process 1 is updated to "complete". If on the other hand an error did occur, the process is updated to "error", to indicate that an error occurred. Preferably, it also updates the process to indicate the type of error that occurred to aid in future remedial action. The skilled reader will appreciate that the types of error that may be experienced will depend upon the nature of the process being undertaken. However, such errors may include, for example, a resource stipulated in the job ticket not being available. For example, a lack of the correct print medium or ink in a printing process, or the lack of a required fort in a preflighting process. Also, if the job ticket stipulates parameters that are not valid for a given task, an "error" will also be generated. This might occur in an impostion process, for example, if the dimensions of the nested images exceed a dimension of the stipulated print medium.

Having updated the status of the relevant process in the job ticket at step 16, imposition software running on the PC 28a returns the print job, together with the updated job ticket to the Workflow Manager at step 18, in a JMF message or using another suitable format.

The Workflow Manager then reads the job ticket at step 20 to determine whether the last process to be attempted, process 1 in this case, generated an error or was successfully completed. In the event that it did generate an error, the Workflow Manager transmits a message, at step 24, to the computer 22 containing the print job together with the updated job ticket detailing the error that occurred. The Workflow Manager then terminates the print job.

The computer 22 then transmits an e-mail message to the personal computer 10 of the graphic artist, at step 26. The message indicates that an error occurred whilst attempting to carry out the modified print job. Preferably it also indicates at which process in particular the error occurred, together with the nature of the error. This may be best implemented by including a copy of the updated job ticket containing the error message; thus ending the process at step 28.

The graphic artist may then take steps to correct the error, possibly with the help of the CP 20. Once the error has been corrected, the graphic artist may implement the method of the present embodiment a further time.

In the event that the Workflow Manager establishes, at step 20, that no error was generated, it then determines at step 22 whether there are any remaining processes still to be carried out on the print job. If there are, the Workflow Manager determines the identity of the resource that is to carry out the next process and transmits the print job, including the modified job ticket and any associated empty data files that there might be, to the appropriate resource, as previously described with reference to step 12. Thus, it will be understood that the output of a given process forms the input of the subsequent process in a job ticket. In this case, the next process to be carried out is preflighting and so the appropriate resource is preflighting software running on the PC 28b.

In this manner, the Workflow Manager continues to manage the work flow of the print job, as described above with reference to steps 12 to 22 of Figure 2, until each of the remaining processes, 2, -- n-1 and n, detailed on the job ticket have been completed, or until such time as an error is detected at step 20.

When it has been determined that the final process, n, defined in the job ticket may be processed without error, and it has been verified that no more processes are left to implement at step 22, the Workflow Manager transmits the print job, containing the completed job ticket, at step 30, to the internet enabled computer 22 of the CP and terminates the print job. The computer 22 in turn transmits an e-mail to the personal computer 10 of the graphic artist, at step 32. The message indicates that the no errors were generated by the workflow defined in the job ticket. This may be done simply by including a copy of the updated job ticket in the e-mail transmitted to the personal computer 10. The method then terminates at step 34.

The graphic artist then knows on receipt of the e-mail communication that the resources required to print the unmodified proof file should be available at the CP and that parameters defined in the job ticket for controlling each process of the print job are valid. Therefore, he can expect the unmodified proof file to be printed without error. Therefore, he may then send to the CP a further print job by e-mail. However, this time, the e-mail should contain the unmodified proof file, with the proof document contents, which were absent from the modified proof file.

The CP then follows the same process as has been described above with respect to the modified proof file, with regard to the unmodified proof file to generate the required printed output.

### Further Embodiments

In the above embodiment numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

For example, the skilled reader will appreciate that the present invention may be applied to other printing situations. For example, the present invention may also be applied to print on demand e-services, where hard copy images may be produced remotely from the client from digital document (images, drawings, slides, etc.) supplied by the client over a communications network. More generally, the present invention may be applied with benefit to any printing system where print data is transmitted for printing, together with a workflow, or equivalent data, defining the processes required to print a print job.

In one further embodiment, a client may send a message to the printer system defining a workflow that includes a partial workflow only, for example, pre-press tasks only; i.e excluding printing processes. In this manner, the client may verify that any given workflow or part of a workflow may be carried out correctly.

Furthermore, although the above-described embodiment described a workflow manager, the skilled reader will realise that functionality of the workflow manager could be incorporated into the, or each, of the software and/or hardware elements arranged to carry out the processes involved in a given workflow.

Although in the above-described embodiment, each of the processes described in the workflow were non-manual in nature, the skilled read will understand that certain manual processes, such as "framing" a printed image, may be present in a given work flow. Furthermore, it will be understood that in an embodiment of the present invention, the system may be configured to skip manual processes; thus, neither requiring their implementation, nor generating an error, in determining whether a workflow may be implemented without error.

In the above-described embodiment, the processes making up a workflow are verified sequentially, in the order in which the print job workflow would be implemented. However, the skilled reader will appreciate that in certain embodiments, the verification of the processes making up a workflow may be verified in a non-sequentially manner. Thus, they may be verified in parallel, or at least partially in parallel. Alternatively, they may be verified in a different order to that stipulated in the workflow. This may be co-ordinated by the work-flow manager in order to avoid bottlenecks occurring at various elements of the printer system, for example.

## Claims

1. A method of verifying the operation of a printing system, comprising the steps of:
transmitting from a data processing device to the printing system a message comprising data identifying a plurality of processes associated with a corresponding print job and further comprising process requirements associated with the plurality of processes;
verifying at the printing system that the plurality of processes are processable, without printing image data corresponding to the print job; and,
communicating to the device the result of the verification step.

2. A method according to claim 1, wherein the transmitted message comprises no image data, or incomplete image data relating to the print job.

3. A method according to claim 1 or claim 2, wherein the step of verifying that the plurality of processes may be implemented further comprises the step of determining: whether the resources required for carrying out the print job are available to the printing system; or, whether the printing system is correctly configured to implement the print job; or, whether parameters comprised in the data are valid.

4. A method according to claim 3, wherein the resources comprise: hardware, such as one or more data processing devices, printers or laminators; or, software, such as programs or libraries; or, consumables, such as ink, print media or lamination material.

5. A method according to any preceding claim, wherein the printer system comprises a plurality of hardware and/or software elements, selected elements being arranged to implement corresponding identified processes, the method further comprising the steps of:
sequentially passing a data file corresponding to the message data to at least a plurality of the selected elements; and at each selected element;
determining whether a corresponding process may be implemented in accordance with the data file; and, if not,
generating an error message.

6. A method according to claim 5, further comprising the step of a selected element causing the data file to be modified to reflect the determination if the result of the determination is that a corresponding process may not be implemented in accordance with the data file.

7. A method according to claim 5 or claim 6, wherein the printing system comprises a further hardware and/or software element adapted to control the passing or transferral of the data file between the selected elements.

8. A method according to claim 6 or claim 7, further comprising the step of transmitting to said data processing device a return message corresponding to the error message or confirming that no error messages were generated.

9. A method according to claim 8, further comprising the steps of:
transmitting from the device to the printing system a further message comprising the image data corresponding to the corresponding print job; and,
implementing the print job.

10. A method according to any preceding claim, wherein the message is, or comprises a proof print file having no image data relating to the corresponding print job, or incomplete image data relating to the corresponding print job.

11. A method according to any preceding claim, wherein the message, or the return message, or the further message is sent over a communication network using a file transport protocol or e-mail.

12. A method according to any preceding claim, wherein the identified processes comprise any of pre-press, printing or post-press processes, such as rasterising, preflighting, imposition, printing, lamination and framing.

13. A method according to any preceding claim, wherein the printer system is a print on demand e-service, or a remote proofing printing service.

14. A method of determining that a printing system may implement a workflow, comprising the steps of:
transmitting from a client device to the printing system a message comprising a job ticket corresponding to the workflow;
verifying at the printing system that the job ticket may be processed without error without implementing the print job corresponding to the work flow.

15. A method of verifying the operation of a printing system, comprising the steps of:
receiving at the printing system data identifying a plurality of processes associated with a corresponding print job and further comprising process requirements associated with the plurality of processes;
verifying at the printing system that the plurality of processes are processable, without printing image data corresponding to the print job.

16. A computer program comprising program code means for performing the method steps of any one of claims 1 to 15 when the program is run on a computer and/or other processing means associated with suitable apparatus.

17. A printing system arranged to implement the method of any one of the claims 1 to 15.

18. A printing system arranged to receive a message form a client device, the message comprising process data at least partly specifying a plurality of processes required to be implemented by the printer system in order to process a print job, the printing system being arranged to verify that the print job may be implemented in accordance with the process data without implementing the print job, and being further arranged to notify the client device in dependence upon the verification.

19. A system according to claim 18, wherein said printing system comprises a remote proofing enabled inkjet printing apparatus.
